(19) Europäisches Patentamt
European Patent Office
Office européen des brevets

(11) **EP 1 908 992 B1**

(12) **EUROPÄISCHE PATENTSCHRIFT**

(45) Veröffentlichungstag und Bekanntmachung des Hinweises auf die Patenterteilung:
**05.05.2010 Patentblatt 2010/18**

(21) Anmeldenummer: **05851077.7**

(22) Anmeldetag: **05.07.2005**

(51) Int Cl.:
*F16H 55/08* *(2006.01)*

(86) Internationale Anmeldenummer:
**PCT/RU2005/000367**

(87) Internationale Veröffentlichungsnummer:
**WO 2007/008096 (18.01.2007 Gazette 2007/03)**

(54) **ZAHNRADANTRIEB**

GEAR DRIVE

ENGRENAGE

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**09.04.2008 Patentblatt 2008/15**

(73) Patentinhaber: **Zhuravlev, German Alexandrovich Rostov-na-Donu 344019 (RU)**

(72) Erfinder: **Zhuravlev, German Alexandrovich Rostov-na-Donu 344019 (RU)**

(74) Vertreter: **Jeck, Anton**
**Jeck - Fleck - Herrmann**
**Patentanwälte**
**Klingengasse 2/1**
**71665 Vaihingen/Enz (DE)**

(56) Entgegenhaltungen:
**EP-A- 0 293 473    RU-C1- 2 160 403**
**SU-A1- 1 571 330    US-A- 4 640 149**
**US-B2- 6 837 123**

**Beschreibung**

Die Erfindung betrifft ein Radgetriebe, insbesondere Zahnradgetriebe, das aus Zahnrädern mit einer Winkelteilung der Zähne von zusammenwirkenden Zahnkränzen gebildet ist. Dabei sind die Zahnkränze mit Einflusselementen und Mehrflusselementen der seriell zusammenwirkenden Zahnkränze versehen und die Stirnzahnprofile der Zähne abschnitts- und/oder punktweise in theoretischen Berührungspunkten beim Zahnkopf konvex und beim Zahnfuß konkav gewölbt in außerhalb vom Wälzpunkt liegende Bogenstrecken fließend miteinander und mit anderen Evolventen (Quasievolventen)-Strecken verbunden.

Aus dem UdSSR-Patent Nr. 11 85942 ist ein räumliches Radgetriebe mit einer Mischverzahnung mit axialem Eingriffswechsel bekannt. Bei diesem Radgetriebe sind die außer dem Wälzpunkt liegenden punktweise gekoppelten Strecken des Stirn-Zahnprofils mit den konkaven Linien mit einem Radius $p_{ass}$ beim Kopf und den konvexen Linien mit einem Radius $p_{fss}$ beim Fuß beschrieben, wobei $p_{ass} - p_{fss} > 0$ ist. Dabei sind diese Linien durch Evolventenstrecken untereinander mit dem Flankenwinkel $a >> a_k$ bei $a = a_{1a}$ und $a_k < a_{1a}$ sowie mit dem vergrößerten Eingriffswinkel $a_{tw}$ verbunden. Mit $a_k$ ist der theoretische Druckwinkel der außer dem Wälzpunkt liegenden Bogenstrecke und mit $a_{1a}$ der Flankenwinkel im unteren Grenzpunkt der bogenförmigen Grundstrecke beim Kopf des Zahnes bezeichnet.

Durch die Realisierung von zwei Effekten

  a) des Effektes der Superadditivität des kinematischen Prinzips IP (im Gegensatz zum additiven Prinzip mit einfacher Summierung der Verzahnungskomponenten bei deren Kombination in der Mischverzahnung) und

  b) des Effektes der Berührungskrümmung gibt es in solchen Getrieben keinen Verlust der Berührungsfläche der Zähne (Berührungseffekt des wesentlichen, über die Beschreibung der Lösung für das Hertz'sche Kontaktproblem hinausgehenden Einflusses der wachsenden Innigkeit des Kontakts von elastischen Körpern auf die Reduzierung der Flächenpressung und infolgedessen Feststellung der prinzipiellen Möglichkeit zur wesentlichen Verbesserung der Eingriffsphasen im Wälzpunkt und außerhalb des Wälzpunktes).

Die Pressungsfestigkeit des Wälzpunktes ist damit maximal erhöht. Die Werte für die Kontakt-Dauerhaftigkeit der Eingriffsphasen (im Wälzpunkt und außerhalb vom Wälzpunkt) sind ausgeglichen. Insbesondere werden die erhöhte Sanftigkeit der Arbeit und die niedrigen Biegespannungen durch die Formbesonderheiten der Stirnprofile der Zähne erreicht. Zu den Nachteilen des bekannten Getriebes gehören die beschränkte bauliche Flexibilität in Bezug auf die Erhöhung der Innigkeit und die Realisierung des Krümmungseffekts des Kontakts in Außer-Wälzpunkt-Eingriffsphasen sowie die Auswahl der Parameter für die Längsform ($\varepsilon_\beta = 1$) der Zähne.

Aus dem EP 0293473 C und dem RU-Patent 1075041 ist ein räumliches Radgetriebe mit Mischverzahnung bekannt. Dieses Radgetriebe beruht auf dem kinematischen Prinzip der Gemischtheit IP. Die Stirnprofile der Zähne sind aus dem Evolventen- und den punktweise gekoppelten bogenförmigen Grundstrecken gebaut. Sie sind beim Kopf konvex und beim Fuß der Zähne konkav. Die Parameter sind unabhängig von Zeichen und dem absoluten Abweichungsgrad des Achsenabstands $\Delta a_w > 0$ und $\Delta a_w < 0$. Die bogenförmigen Grundstrecken sind über zusätzliche Bogenstrecken miteinander verbunden. Die konkave Strecke weist beim Kopf einen Radius $p_{pa}$ und die konvexe Strecke beim Zahnfuß einen Radius $p_{pf}$ auf. (Die Bogenstrecken sind kleindimensioniert technologisch, aufgrund des Konzentratorkrümmungs-Effekts.) Der Effekt besteht im Einfluss der steigenden Krümmung des geometrischen Konzentrators (bei bestimmten Ladungsparametern nach dem Querbiegungsschema) auf die Reduzierung der Biegespannungen. Durch dieses Verfahren ist das kinematische Unabhängigkeitsprinzip möglich geworden. Die Evolventenstrecken sind mit $a >> a_{1a}$ ausgeführt. Durch die größere Überdeckung der Zähne und weniger Empfindlichkeit des Getriebes auf Achsenabstandsabweichungen kann die aktive Breite des Zahnkranzes $b_w$ bis $b_w = 0.7 \, p_x$ ($p_x$ ist die Axialsteigung) reduziert werden. Die Werte der Biegedauerhaltbarkeit, der Vibroakustik und der Arbeitsdauer werden wesentlich verbessert. Der Nachteil dieser Lösung ist die beschränkte bauliche Flexibilität bei der Ausführung der Effekte der Krümmung und der steigenden Innigkeit der Berührung in allen Eingriffsphasen.

Ein Radgetriebe mit einer Mischverzahnung ist auch aus dem UdSSR-Patent 18397100 bekannt. Dieses Radgetriebe ist von Mehrfluss-Elementen vom Typ IP mit der Verschiebung der Eingriffsphasen von Zahn-Stirnprofilen bei verschiedenen Paaren zusammenwirkender Zahnkränze, z. B. mehrteiliger Räder, gebildet. Jedes einzelne Paar zusammenwirkender Zahnkränze hat Evolventen- (bei $a >> a_{1a}$) und punktweise gekoppelte Strecken der Stirn-Zahnprofile. Sie bilden die selbständigen Eingriffsphasen mit dem Bruch der Kontinuität bei deren kinematischen Eingriff. Dabei existiert diskret (nur für einzelne Punkte und lokale Profilabschnitte) eine gemeinsame Tangentialebene beim Kontakt der Eingriffszähne. Dabei wird - durch die relative Verschiebung von Phasen diskreter Verzahnung - der Koeffizient für die Stirnüberdeckung $\varepsilon_\alpha = 1$ und die gegenseitige Kopplung der Radpaare erzielt. Durch die Einhaltung der Bedingung $\varepsilon_\alpha = 1$ wird die bauliche Flexibilität des Mehrfluss-Getriebes IP in Bezug auf die Realisierung des Effektes der Krümmung und der steigenden Innigkeit der Berührung beschränkt.

Aus dem RU-Patent 1571330 ist ein Radgetriebe mit Mischverzahnung mit und mit Stirn-Eingriffswechsel der eingangs erwähnten Art bekannt. Dieses Radgetriebe ist auf dem kinematischen Prinzip der Gemischtheit IP und des Effektes der Berührungskrümmung aufgebaut. Die Stirn-Zahnprofile des Getriebes IP weisen die Evolventen-(Quasievolventen-)Strecken und außer dem Wälzpunkt liegende abschnitts- und/oder punktweise gekoppelte (beim Kopf konvexe und beim Fuß konkave) Bogenstrecken auf. Die Bogenstrecken sind miteinander in den theoretischen Kontaktpunkten der außer dem Wälzpunkt liegenden Strecken (a = $a_k$ = $a_{1a}$) gekoppelt. Dabei wird der Knickpunkt im theoretischen Berührungspunkt beim Zahnfuß gebildet. Die Evolventenstrecken bilden eine selbständige Eingriffsphase mit dem Stirnüberdeckungs-Koeffizienten $\varepsilon_\alpha$ = 1. Die Evolventenstrecken weisen auch in den Grenzpunkten verschiedene (auf beiden Seiten vom Knickpunkt) Berührungsarten der Zahnprofile auf, die von der konvex-konkaven Berührung bis zur bikonvexen Berührung reichen. Das Getriebe hat im Allgemeinen einen Kontakt vom WBB-Typ ohne Bedingungen bezüglich der axialen Überdeckung. Das Getriebe zeichnet sich durch Krümmungseffekte aus. Dazu zählen die erhöhte Innigkeit der Berührung (die bis zur WBB in den außer dem Wälzpunkt liegenden Eingriffsphasen reicht), die erhöhte Superadditivität der Mischverzahnung und die bauliche Flexibilität der Stirn- und Längsform der Zähne. Es sind auch die Werte der Eingriffsdynamik, die Kombination des Einlaufverhaltens und der Verschleißfestigkeit, die Vibroakustik, die Belastbarkeit und die Arbeitsdauer des Radgetriebes verbessert.

Durch diese Beschränkungen der baulichen Flexibilität der bekannten Getriebe mit der Vorgabe bezüglich der Stirn- und Gesamtüberdeckung der Zähne von $\varepsilon_\alpha$ > 1 und $\varepsilon_\gamma$ > 1 wird das Wachstum der Innigkeit bei der Berührung (Eingriffswinkel atw und/oder Höhenmaße der außer dem Wälzpunkt liegenden punktweise gekoppelten Strecken) in verschiedenen Eingriffsphasen sowie des Superadditivität-Grades bei der Mischverzahnung erhalten.

Durch die US 4.640.149 ist außerdem eine Verzahnung bekannt, die eine Kombination aus einem Evolventen-Profil und einem Nicht-Evolventen-Profil aufweist. Die Verzahnung weist besonders einen durchgehenden bzw. konstanten relativen Bogenlauf bzw. ein konstantes Krümmungsverhältnis auf. Die Verzahnung hat einen hohen Überdeckungsgrad von zumindest 2 bzw. einen Überdeckungskoeffizienten $\varepsilon_y \geq 2$ und einen Stirnüberdeckungs-Koeffizienten $\varepsilon_\alpha$ > 1.

Durch die EP 0 293 473 A1 ist ferner ein Getriebe mit einer gemischten Raumverzahnung bekannt. Die Verzahnung weist einen ersten Abschnitt auf, der zumindest annähernd Evolventenform aufweist. Dieser erste Abschnitt befindet sich in einem durch den Teilkreis hindurchreichenden Bereich. An diesen ersten Abschnitt grenzen zwei benachbarte zweite Abschnitte an, die gemäß einem Novikov-Verzahnungsprofil geformt sind. Die zweiten Abschnitte befinden sich in Bereichen, die außerhalb des Teilkreises liegen. Zumindest in zwei Abschnitten weist die Randfläche der am Zahneingriff teilnehmenden Zahnflanke eine Abweichung von der Randfläche des theoretischen Verzahnungsprofils in Richtung zunehmender Zahndicke auf. Auch diese Verzahnung hat einen Überdeckungsgrad von zumindest 1 bzw. einen Überdeckungskoeffizienten $\varepsilon_y \geq 1$ und einen Stirnüberdeckungs-Koeffizienten > 1.

Es ist daher Aufgabe der Erfindung, bei einem Radgetriebe der eingangs erwähnten Art die bauliche Flexibilität und die Innigkeit der Zahnberührung zwecks Verbesserung der Qualitätswerte zu steigern.

Diese Aufgabe der Erfindung wird dadurch gelöst, dass die zusammenwirkenden Zahnkränze mit den Winkeln ($\varphi_{a1,2}$) einer Stirnüberdeckung ausgeführt sind, wobei der Abbruch der Phasen des Stirn-Eingriffswechsels der Zähne um den Winkel ($\varphi_{D1,2}$) oder $\varphi'_{D1,2}$ des diskreten Eingriffswechsels von Endpunkt ($N_2$) der Zusammenwirkung von Stirnprofilen der Zähne bis zum Anfangspunkt ($N_2$) der Zusammenwirkung von Zahnprofilen des weiteren Zahnpaares gebildet ist und dass mindestens eine Phase des diskreten Eingriffswinkels vom Zahnpaar durch die außer dem Wälzpunkt liegenden beim Zahnkopf konvexen und beim Zahnfuß konkaven Bogenstrecken gebildet ist und das Getriebe mit einem Koeffizienten für die Stirnüberdeckung der Zähne $\varepsilon_a$ < 1 ausgeführt ist (z. B. bei einem gesamten Überdeckungskoeffizienten $\varepsilon_y$ = 0).

Die Stirnzahnprofile enthalten die abschnitts- und/oder punktweise gekoppelten Bogenstrecken, die beim Kopf konvex mit dem Radius $p_a$ und beim Fuß konkav mit dem Radius $p_f$ gewölbt sind und den theoretischen Druckwinkel $a_k$ aufweisen. Die Bogenstrecken weisen die erhöhte Innigkeit der Berührung auf und sind fließend mit anderen beispielsweisen Evolventenstrecken verbunden. Auch weisen sie die Brüche in den Phasen des Eingriffswinkels von Stirnzahnprofilen beim Winkel des diskreten Eingriffswechsels $\varphi_{d1,2}$ auf. Dabei ist mindestens eine Phase des diskreten Eingriffswechsels von Stirnprofilen der Zahnpaare durch den Kontakt der außer dem Wälzpunkt liegenden konvexkonkaven Strecken gebildet. Das Radgetriebe weist solche Phasen des Eingriffswechsels von Stirnprofilen der Gegenzähne in deren konvex-konkaven Strecken auf. Im Weiteren werden diese Radgetriebe diskrete Getriebe genannt. Das sind die Getriebe, die den kinematisch richtigen Eingriff der Stirnzahnprofile nur in einzelnen Eingriffsphasen oder abschnittsweise gewährleisten, wenn die Stirnüberdeckungswinkel bei jedem der Gegenräder kleiner sind als deren Winkelteilungen. Der Verzicht auf die durch die traditionellen Prinzipien für die Bildung der Gegenzahnräder bedingten Beschränkungen hinsichtlich der Zahnform (Stirn- und Längsform) wird von der baulichen Ungleichmäßigkeit der Mitnahme begleitet, die durch die Besonderheiten der Zahnform in der Phase von deren Eingriffswechsel ausgeglichen werden. Erstens sind die zyklischen und kinematischen Abweichungen des Getriebes nach dem Niveau kommensurabel mit den zugelassenen Fehlern der realen Evolventengetriebe. Zweitens wird durch den Stirn-Eingriffswechsel der Zähne in den außer dem Wälzpunkt liegenden Bogenstrecken mit hoher Innigkeit des Eingriffs und durch den Effekt der Eingriffskrümmung beim Krafteingriff Folgendes erzielt:

a) die Anforderungen an das Getriebe im Zusammenhang mit der kinematischen Genauigkeit, dem Zahneingriff durch die Lage der Getriebeachsen und der Sanftheit der Arbeit (Wälzsprung der Zahnfrequenz) werden gemäßigt und

b) die sanfte Arbeit, das gute Tragbild, die niedrige Geschwindigkeit des Zahnstoßes, die Reduzierung der dynamischen Belastung und vibroakustischen Aktivität sowie die Erhöhung der Belastbarkeit und Haltbarkeit.

Bei den Zähnen mit beliebiger Längsform können die eingegebenen Intervalle $\varphi_{D1,2}$ zwischen den Eingriffsphasen in den Grenz- bzw. theoretischen Berührungspunkten der neugekoppelten Strecken der Stirnzahnprofile umso größer sein, je kleiner die Umlaufgeschwindigkeit der zusammenwirkenden Zahnräder und je größer die Höhenmaße der punktweise gekoppelten Strecken sind. Die Größe und die Innigkeit der Berührung von außer dem Wälzpunkt liegenden Strecken (durch die Reduzierung der Größen der Evolventenstrecken ohne Wachstum von $\varphi_{D1,2}$) können erhöht werden und zwar aufgrund des Effektes der Superadditivität und der Mischverzahnung, in dem die Parameter der Evolventenstrecken variiert werden.

Aber endgültig kann diese Aufgabe durch die Verschiebung der gleichnamigen Verzahnungsphasen der Zahnkränze um den Winkel $T_{p1,2}$ bis zum vollen Ausschluss der Evolventenstrecken gelöst werden. Dies erfolgt durch die Ausführung des diskreten Radgetriebes mit Mehrfluss-Elementen, insbesondere aus mehrteiligen Rädern in Paketform. Das Radgetriebe dieser Art ist **dadurch gekennzeichnet, dass** es mit der Kombination der diskreten Eingriffswechsel der nach verschiedenen Paaren der zusammenwirkenden Zahnkränze und mit ungefähr gleichen Winkelentfernungen zwischen benachbarten Kreuzungspunkten der Projektionen von Normalen zu den Stirnzahnprofilen (in theoretischen Berührungspunkten K und charakteristischen Punkten der aktiven Strecken) aller Zahnkränze mit der Wälzbahn von jedem Rad auf dessen Stirnebene, z. B. mit dem Nullkoeffizienten für die gesamte Überdeckung $\varepsilon_y = 0$, ausgeführt ist und dass die Winkel des diskreten Stirn-Eingriffswechsels aus dem Verhältnis ($\varphi_{D1,2}/T_{1,2} = 0,25$ gewählt sind.

Die Räder sind untereinander mittels der relativen Verschiebung in Umlaufrichtung der gleichnamigen Eingriffsphasen der Stirnzahnprofile von zwei und mehr koaxialen, gerad- oder schrägverzahnten Zahnkränzen verbunden. Darunter wird auch die Kombination der diskreten Eingriffswechsel der Zähne in verschiedenen Paaren der zusammenwirkenden Zahnkränze und ungefähr gleiche Winkelentfernungen zwischen den benachbarten Kreuzungspunkten mit der Wälzbahn der Projektionen von Normalen zu den Stirnzahnprofilen aller Zahnkränze von jedem Rad auf dessen Stirnebene benutzt (wobei die Kreuzungspunkte durch die theoretischen Berührungspunkte K mit charakteristischen Durchschnitts- bzw. Grenzpunkten der aktiven Strecken gebildet sind). Die Winkelwerte des diskreten Stirn-Eingriffswechsels sind aus dem Verhältnis $\varphi_{D1,2}^{1,2,3\ldots}/\tau_{1,2} \leq 0,35$ gewählt. Die Linien der kinematisch perfekten Berührung der Zähne treten diskret in verschiedenen Verzahnungsphasen auf verschiedenen Strecken in der Breite des mehrteiligen Rads und in der Höhe von dessen Zähnen in Erscheinung. Dies geschieht im Gegensatz zur kontinuierlichen Bewegung der Berührungslinien und -punkte auf der Oberfläche der Zähne bei den traditionellen Getrieben über deren Höhe (wie beim Evolventengetriebe mit Geradverzahnung) und über die Breite des Zahnkranzes (wie beim Nowikow-Getriebe). Die erhöhte Gleichmäßigkeit der Verteilung von Eingriffswechsel-Phasen erhöht die Sanftheit der Arbeit beim diskreten Getriebe, u. a. bei Zweikranz-Ausführung der Räder. Die Verbesserung der gesamten (kombinierten Stirn- und Längs-) Form der Zähne sichert das ziemlich hohe, für jede andere Verzahnung unzulängliche Niveau der Innigkeit des Eingriffs und den Ausschluss der axialen Kräfte beim Eingriff. Dadurch lassen sich in vollem Umfang die Vorteile der Linienberührung der Zähne und die kinematischen Reserven des Außer-Wälzpunkt-Eingriffs nutzen. Die Vorteile der diskreten Verzahnung lassen sich gut erkennen. Geringe Veränderungen (beim Eingriff von jedem Zahnpaar) der Verhältnisse von kinematischen Berührungsparametern, Wegfall der Evolventenstrecken (mit der relativ niedrigen baulichen Flexibilität) der Stirnprofile und Wälzpunkt-Phasen des reinen Wälzens von Zähnen sowie die erhöhte Innigkeit der Berührung sichern eine verbesserte Kombination der Verschleißfestigkeit und des Einlaufverhaltens vom Getriebe, der Reduzierung von dessen vibroakustischer Aktivität und der Empfindlichkeit gegenüber Fertigungs- und Festigkeitsabweichungen der Geometrie. Die ähnliche Ausführung der diskreten Verzahnung ist in verschiedenen Mehrfluss-Konstruktionen anwendbar, einschließlich der Planetenradgetriebe. Bei jedem gesamten Überdeckungskoeffizienten $\varepsilon_\gamma = \varepsilon_\alpha + \varepsilon_\beta$ ist das Getriebe mit dem Stirnüberdeckungskoeffizienten der Zähne ausgeführt, der kleiner oder gleich Null ist. Dabei sind $\varepsilon_\alpha$ und $\varepsilon_\beta$ die Koeffizienten der Stirn- bzw. axialen Überdeckung der Zähne.

Empfehlenswert ist eine Außer-Wälzpunkt-Ausführung des Typs IP, wobei Stirnräder, Kegelräder oder Schnekkenräder eingesetzt sind. Diese Ausführung wird dann als Außer-Wälzpunkt-Getriebe ausgebildet, wobei der obere Grenzpunkt der kleindimensionierten konvexen technologischen Strecke des Zahn-Stirnprofils bei einem Zahnkopf der Gegenräder liegt, die Evolventenstrecken die Phasen des Nach-Wälzpunkt- und Vor-Wälzpunkt-Eingriffs bilden und die Winkel des diskreten Stirn-Eingriffswechsels aus dem Verhältnis $\varphi_{D1,2}/\tau_{1,2} = 0,4$ gewählt sind.

Die Ausführung umfasst kleindimensionierte technologische Strecken des Stirnzahnprofils, wobei der obere Grenzpunkt der kleindimensionierten konvexen technologisehen Strecke des Zahnprofils bei einem der Gegenräder beim Zahnkopf liegt. Die Evolventen-(Quasievolventen-)Strecken der Profile bei den zusammenwirkenden Zähnen bilden die Phasen des Nach-Wälzpunkt- und des Vor-Wälzpunkt-Eingriffs. Beim Außer-Wälzpunkt-Getriebe IP sind die geschwächten Wälzpunkt-Strecken beseitigt, Dadurch wird ermöglicht, das Einlaufverhalten (insbesondere bei $\varepsilon_\beta = 0$) und die Funktionszuverlässigkeit des Getriebes zu verbessern. Dabei werden die Hauptvorteile des diskreten Getriebes IP erhalten. Darüber hinaus treten in den diskreten Außer-Wälzpunkt-Getrieben IP der Effekt der Ausgleichung der Berührungsfestigkeit des Zahnkopfes und -fußes und der so genannte Kopfeffekt in Erscheinung. Durch den Bereich der Winkelverhältnisse $\varphi_{D1,2}/_{T1,2} = 0,4$ sind die Eingriffsbedingungen bei $\varepsilon_\beta = 0,5$ bestimmt. Bei $\varepsilon_\beta < 0,5$ wäre es sinnvoll, diesen bis = 0,2 zu senken.

Bei Kegelrad-, Hypoid- und anderen Getrieben in Außer-Wälzpunkt-Ausführung empfiehlt sich eine Ausführung, die dadurch gekennzeichnet ist, dass sie als Außer-Wälzpunkt-Getriebe ausgeführt ist. Dabei sind die Bogenstrecken des Zahnfußes und des Zahnkopfes fließend miteinander verbunden, z. B. im Zwischen-Knickpunkt "c" beim Teilungsfuß des Zahns mit dem Profilwinkel $a_c$. Die Winkel des diskreten Stirn-Eingriffswechsels sind aus dem Verhältnis $\varphi_{D1,2/T1,2} = 0,25$ gewählt.

Jede außer dem Wälzpunkt liegende Bogenstrecke beim Paar der identischen Bezugsprofile sollte gemischt und nach verschiedenen Gesetzen mit der Knickbildung in theoretischen Berührungspunkten beschrieben sein. Die außer dem Wälzpunkt liegenden Strecken des Zahnfußes und des Zahnkopfes sollten fließend miteinander gekoppelt sein, z. B. mit der Evolventenstrecke verbunden bzw. in einem Punkt mit dem Profilwinkel $\alpha_c$ gekoppelt sein. Das Getriebe kann mit dem diskreten Eingriffswechsel in theoretischen Berührungspunkten und dem reduzierten gesamten Überdeckungskoeffizienten $\varepsilon_\gamma$, (z. B. bei $\varepsilon_\gamma = 0$) ausgeführt werden. Die Winkel des anderen diskreten Eingriffswinkels sind aus dem Verhältnis $\varphi_{D1,2}/T_{1,2} = 0.25$ gewählt. Dank der gegensätzlichen Zeichen der Streckenkrümmung auf beiden Seiten des theoretischen Berührungspunkts ist ein derartiges Getriebe praktisch unempfindlich gegenüber den Abweichungen des Achsenabstands $\Delta a_w > 0$.

Bei verschiedenen diskreten Getrieben können die punktweise gekoppelten außer dem Wälzpunkt liegenden Strecken der Profile bei den Zahnpaaren im Bereich der Druckwinkel, die den theoretischen Druckwinkel $a_k$ überschreiten, mit den fließenden Kurven beschrieben werden. Diese Kurven nähern sich an die Kreisbögen mit den technologisch möglichst nahen Krümmungsradien an. Das ist der Fall, wenn die zulässigen Abweichungen der Geometrie- und Montageparameter genommen werden, die äquivalent zur Erweiterung des Achsenabstands bei den Stirnrädern und der Axialanstellung der Kegelräder sind. Dadurch wird einerseits das kinematische Prinzip der Unabhängigkeit bei der Auswahl der Krümmungsradien der punktweise gekoppelten, außer dem Wälzpunkt liegenden Strecken der Stirnzahnprofile von den Geometrieabweichungen des Getriebes eingeführt. Diese Abweichungen sind den Änderungen des Achsenabstands äquivalent. Andererseits bestimmen diese Abweichungen nur die maximal mögliche Ist-Innigkeit der Berührung bis zur Oberflächenberührung für die Strecken $a = a_k$ der Zähne (d. h. bei den verantwortungsvollsten Phasen von deren Eingriffswechsel). Die Ist-Innigkeit stimmt auch mit jedem stochastisch in Erscheinung tretenden Niveau der Abweichungen überein. Es wird dadurch auch der Ist-Wert des Flankenspiels bestimmt. Zur Vergrößerung der Höhenmaße der punktweise gekoppelten Strecken (z. B. in einer der Drehrichtungen) werden die Zähne des diskreten Getriebes mit dem asymmetrischen Stirnprofil angefertigt.

Das technische Ergebnis und der positive Effekt gegenüber dem Stand der Technik liegen darin, dass die Erfindung - durch die bauliche Flexibilität und Innigkeit der Zahnberührung - die Empfindlichkeit des Eingriffs gegenüber Geometrieabweichungen reduziert. Zudem wird Folgendes erreicht:

 a) niedrige Niveaus der Berührungs- (Oberflächen- und Tiefenspannungen) und Biegespannungen sowie der Berührungstemperaturen,
 b) geringere Anzahl der Zähne,
 c) verbesserte Bedingungen für den Zahnaufbau,
 d) Zahnformen, die die Belastung der Lager senken,
 e) besonders erleichterte Zahnradausführungen,
 f) Reduzierung (um 1 dBA) der vibroakustischen Aktivität, der Abmessungen, des Gewichts, des Stahlbedarfs und der Selbstkosten,
 g) Herabsetzung der Anforderungen an die Schmierungs- und Wärmeableitungsbedingungen beim Kraftgetriebe,
 h) einfachere Anfertigung dieser Kraftgetriebe und
 i) Verbesserungen des Einlaufverhaltens des Wirkungsgrads, der Schnellläufigkeit, der Belast- und Überlastbarkeit (bis 2-fach) und der Betriebsdauer (bis 10-fach).

Dabei sind die eingeführten kinematischen Prinzipien neu und erfüllen die Bedingungen für den technischen Fortschritt. Zudem ist das Kriterium der industriellen Anwendbarkeit gegeben.

Die Erfindung wird anhand von in den Zeichnungen dargestellten Ausführungsbeispielen näher erläutert. Es zeigen:

Fig. 1   schematisch ein Einfluss-Getriebe mit den im kinematischen Eingriff zusammenwirkenden Zahnrädern in der Phase des Ausspurens der Stirnzahnprofile, wobei die Schnitte der Zahnräder in den Stirnebe-nen gegeben sind,

Fig. 2   schematisch ein Mehrfluss-Getriebe im kinematischen Eingriff mit den auf drei Eingriffsstrecken (C, D und E) zusammenwirkenden Zahnrädern,

Fig. 3   schematisch ein Mehrfluss-Getriebe im kinematischen Eingriff mit den auf drei Eingriffsstrecken (C, D und E) zusammenwirkenden Zahnrädern, wobei die Zahnräder symbolisch durch mehrteilige Rä-der mit je drei koaxialen Zahnkränzen im Schnitt dargestellt sind und die Schnitte in verschiedenen Stirnebenen verlaufen,

Fig.4   schematisch ein Einfluss-Getriebe mit Gegen-Zahnrädern in der Phase des Ausspurens der Stirnzahnprofile beim Krafteingriff,

Fig. 5   die Phase des Kraft-Eingriffswechsels der Zähne beim Einfluss-Stirn mit Kettenrädern,

Fig. 6   ein Getriebe mit mehrteiligen Rädern, die je vier Zahnkränze auf-weisen, die ungleichmäßig gegeneinander versetzt sind,

Fig. 7   die Phase des Kraft-Eingriffswechsels der Zähne bei einem Mehr-fluss-Stirnradgetriebe mit mehrteiligen Rädern,

Fig. 8   den Abschnitt eines mehrteiligen Dreikranz-Zahnrads eines Außer-Wälzpunkt-Getriebes mit integralem Tragbild, das auf den Zahnflan-ken abgebildet ist,

Fig. 9   ein Paar der nichtidentischen Zahn-Bezugsprofile beim Getriebe, wobei die Zahnprofile punktweise gekoppelte Bogenstrecken mit zwei Typen aufweisen und die Kopplungen mit der Evolventenstre-cke unmittelbar im Punkt (z. B. für die Einspur-Strecken) sowie mit-tels kleindimensionierter technologischer Strecken (z. B. für die Ausspur-Strecken) erfolgen,

Fig. 10   ein Paar der nichtidentischen Zahn-Bezugsprofile bei einem Außer-Wälzpunkt-Getriebe mit punktweise gekoppelten Bogenstrecken, die mit den außer dem Wälzpunkt liegenden Evolventenstrecken durch die kleindimensionierten technologischen Strecken verbunden sind,

Fig. 11   ein Paar der nichtidentischen Zahn-Bezugsprofile bei einem Außer-Wälzpunkt-Getriebe mit den punktweise gekoppelten Bogenstre-cken, die unmittelbar (mit Punkten gezeichnet) mit den außer dem Wälzpunkt stehenden Evolventenstrecken verbunden sind und

Fig. 12   ein Paar der Zahn-Bezugsprofile bei einem Getriebe mit den punkt-weise gekoppelten Strecken, die ein veränderliches Krümmungszei-chen aufweisen.

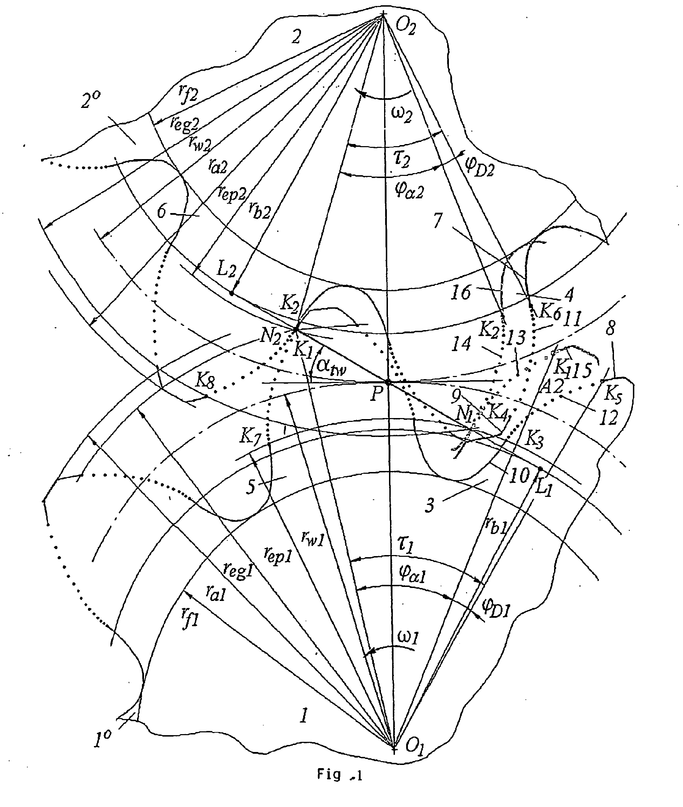

Das Stirnradgetriebe nach Fig. 1 wird bei schwer belasteten Antrieben eingesetzt. Dieses Stirnradgetriebe weist die Zahnräder 1 und 2 auf, die durch die Achsen $O_1$ und $O_2$, die Kreisen - Wälzkreisen $r_{w1}$ und $r_{w2}$, sowie die Spitzenkreise $r_{a1}$ und $r_{a2}$ bzw. Fußkreise $r_{f1}$ und $r_{f2}$ - definiert sind. Die Zahnräder 1 und 2 drehen sich mit den Winkel-geschwindigkeiten $\omega_1$ und $\omega_2$. Im Folgenden werden die Parameter für das Zahnrad 1 mit dem Index 1 und die Parameter für das Zahnrad 2 mit dem Index 2 gekennzeichnet.

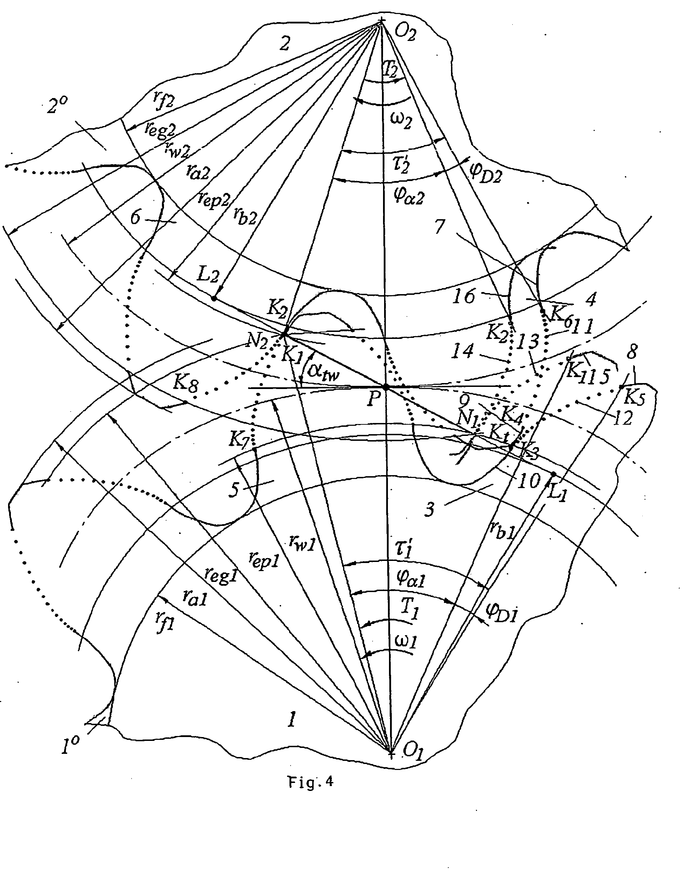

Die Stirnflanken der zusammenwirkenden Zähne 3 und 4 sowie 5 und 6 der Zahnkränze 1° und 2° enthalten die punktweise gekoppelten außer dem Wälzpunkt liegenden Bogenstrecken 8 und 7, 9 und 10. Die Radien $p_a$ beim Kopf sind konvex und die Radien $p_a$ beim Fuß sind konkav gewölbt und bilden die theoretischen Berührungspunkte $K_1$ und $K_2 ... K_8$ und den Druckwinkel $a_k = a_{kw}$. In der Fig. 1 sind auch die in Strichpunktlinien abgebildeten Evolventenstrecken 11 und 12 mit den Grundkreisen mit den Radien $r_{b1}$ und $r_{b2}$ und dem Eingriffswinkel $a_{tw}$ enthalten. Die Evolventenstrecken liegen zwischen den unteren und oberen Grenzpunkten der Radien $r_{ep1}$ und $r_{ep2}$ bzw. $r_{eg1}$ und $r_{eg2}$ und sind in den Punkten $K_3$, $K_4$, $K_5$ und $K_6$ fließend miteinander verbunden. Die Zähne 5 und 6, die in Fig. 1 beim Ausspuren gezeigt sind, □ berühren sich im Punkt $N_2$. Der Punkt $N_2$ fällt mit den theoretischen Berührungspunkten $K_1$ und $K_2$ der außer dem Wälzpunkt liegenden Strecken 7 und 8 und mit den Grenzpunkten der Evolventenstrecken 11 und 12 zusammen. Bei der Einflussausführung des Getriebes und der vollständigen Ausführung der Räder 1 und 2 mit dem Zahnkranzes 1° und 2° ist der Winkel der Stirnüberdeckung der Zähne $\omega_{\alpha1,2}$ von der Einspur-Phase der Zähne 5 - 6 im Punkt $N_2$ der Eingriffslinie $L_1L_2$ bis zur Ausspur-Phase im Punkt $N_2$ kleiner als die Winkelteilung $T_{1,2}$. Die Einspur-Phase ist symbolisch in Fig. 1 und Fig. 4 durch die Profilstrecken 13 - 14 und 15 - 16 gezeigt. Dabei berühren sich die Stirnprofile vom weiteren Zahnpaar 3 und 4 nicht. Sie bilden die Phasen des diskreten (mit dem gegenseitigen Eingriff nur in einzelnen Punkten $N_1$ und $N_2$) Stirn-Eingriffswechsels (mit Abbruch der Phasen) z. B. um den Winkel $\varphi_{D1,2} = 0,15 \, T_{1,2}$, mit dem Stirnüberdeckungskoeffizienten der Zähne $\varepsilon_a$ kleiner als 1 ($\varepsilon_a < 1$) bei beliebiger Längsform der Zähne, u. a. mit dem gesamten Überdeckungskoeffizienten $\varepsilon_\gamma = \varepsilon_\alpha + \varepsilon_\beta < 1$. Durch den Verzicht auf die traditionellen Bedingungen der Überdeckung (wie $\varepsilon_\alpha = 1$ oder $\varepsilon_\gamma = 1$) sind bei solchen Getrieben die Höhenmaße der punktweise gekoppelten Strecken 7 - 8 und 9 - 10 und/oder der Eingriffswinkel der Evolventenstrecken $\alpha_{tw}$, vergrößert. Als Ergebnis wachsen die Innigkeit der Zahnberührung in allen (und in den verantwortungsvollsten) Verzahnungsphasen, die Effekte der Berührungskrümmung und die Superadditivität der Mischverzahnung, die bauliche Flexibilität und Belastbarkeit des Getriebes. Bei einem geradverzahnten Stirnradgetriebe mit der Mischverzahnung IP ermöglicht eine Reduzierung von $\varepsilon_\alpha$ von $\varepsilon_\alpha$ = 1,2 auf $\varepsilon_\alpha$ = 0,944, den Eingriffswinkel $\alpha_{tw}$ von $\alpha_{tw}$ = 23° auf $\alpha_{tw}$ =27° und die Höhe der punktweise gekoppelten Strecken beim Kopf des Zahnrads $z_1$ = 11 von 0,116 m auf 0,387 m zu erhöhen, wobei m den Zahnmodul bedeutet.

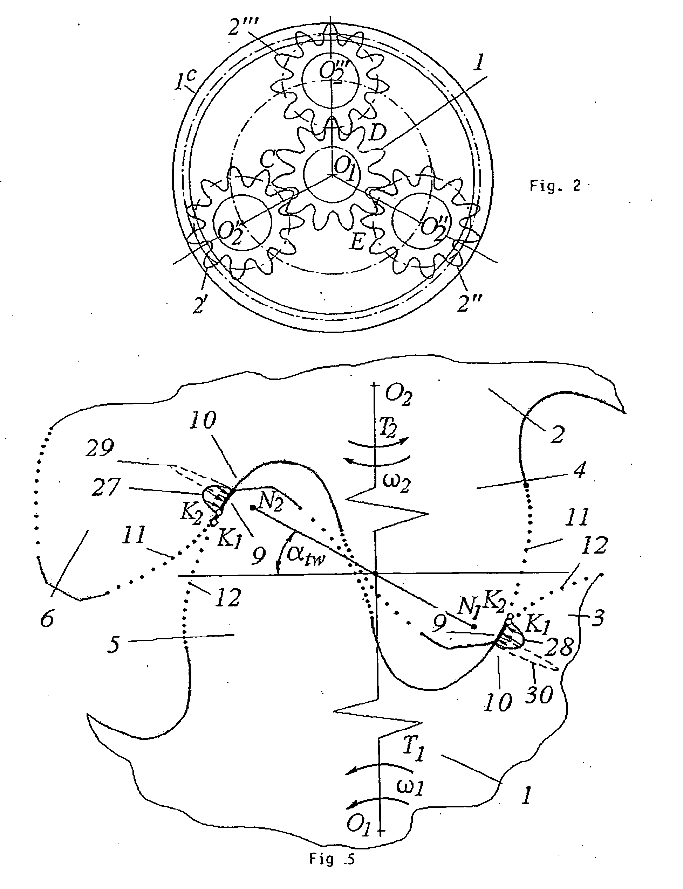

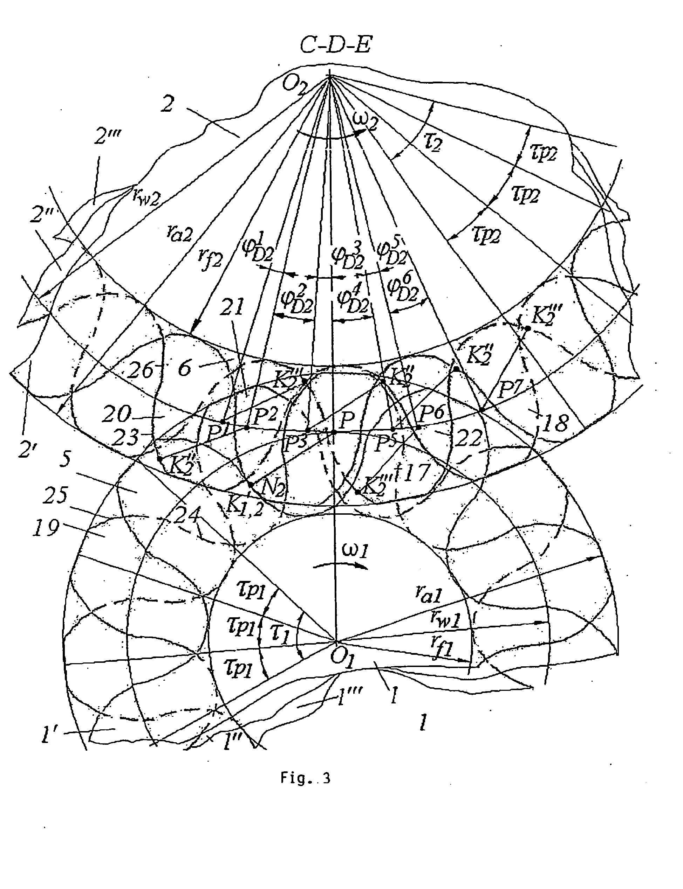

Eine weitere Vergrößerung der Maße und der Rolle der außer dem Wälzpunkt liegenden punktweise gekoppelten Strecken und die gleichzeitige Reduzierung der Maße (und der vollständige Ausschluss) der eine reduzierte bauliche Flexibilität aufweisenden Evolventenstrecken des Stirnprofils ergibt die Mehrfluss-Ausführung des Getriebes nach Fig. 2. Dieses Getriebe umfasst ein Zentralrad 1 auf der Achse $O_1$ und ein koaxiales Aufzugsrad 1°, dessen Zähne nicht gezeigt sind. Die Aufzugsräder sind auf verschiedenen Achsen $O_2'$, $O_2''$ und $O_2'''$) montiert. Sie bilden drei Leistungsflüsse nach den Zonen C, D und E mit der relativen Verschiebung der Eingriffsphasen des Zahns 1 mit den Rädern 2', 2'', 2'''. Zur einfachen Analyse der versetzten Eingriffsphasen ist in Fig. 3 schematisch das Getriebe im kinematischen Eingriff mit mehreren Flüssen mit den in drei Eingriffszonen C, D und E zusammenwirkenden Zahnrädern abgebildet. Diese Zahnräder sind in Fig. 3 symbolisch durch mehrteilige Dreikranz-Räder 1 und 2 mit den koaxialen Zahnkränzen 1', 1'' und 1''' und 2', 2'' und 2''' dargestellt, wobei die Schnitte in verschiedenen Stirnebenen gegeben sind, die gleichmäßig zueinander um den Winkel $T_{p1,2}$ versetzt sind. Die Stirnzahnprofile bilden diskret (bei $\varphi_{a1,2}$=0) die außer dem Wälzpunkt liegenden Eingriffsphasen in den punktweise gekoppelten Strecken 23 und 26, 25 und 24. Dabei sind die Strecken bei dem Zahnkopf eines Rades konvex und beim Zahnfuß des Gegenrades konkav gewölbt. Dies erfolgt beim Verlauf der Profilnormalen in theoretischen Berührungspunkten $K_{1,2}$ über den Wälzpunkt P. In Fig. 3 berühren sich die Zähne 5 und 6 der Kränze 1' und 2' (Punkte $K'_{1,2}$) im Punkt $N_2$. Je nach dem aufeinander folgenden Zusammenfallen der Punkte $P^1$, $P^2$... $P^7$ der Zähne des Rades 2 mit dem Wälzpunkt P wechseln auch die Winkel des diskreten Stirn-Eingriffswechsels - $\varphi^1_{D2}$ vom Fuß des Zahns 22 beim Kranz 2''' bis zum Kopf des Zahns 20 beim Kranz 2'', $\varphi^2_{D2}$ vom Kopf des Zahns 20 beim Kranz 2'' bis zum Fuß des Zahns 18 beim Kranz 2'' und $\varphi^3_{D2}$ vom Fuß des Zahns 18 beim Kranz 2'' bis zum Kopf des Zahns 6 beim Kranz 2'' usw. Die im kinematischen Eingriff beim Krafteingriff zwischen dem Arbeitsprofil der Zähne entstehenden Spiele werden teilweise oder vollständig beseitigt. Der Krafteingriff erfolgt mit Drehmomenten $T_{1,2} \neq 0$. Bei einem Getriebe mit einem Leistungsfluss nach Fig. 4 ist die Ausspur-Phase der verformten Zähne 5 und 6 abgebildet und die Zahnteilung des Antriebsrads reduziert $T'_1 < T_{T1}$. Die Zahnteilung des Antriebsrads wird dagegen vergrößert $T'_2 < T_2$. Dadurch kann die Kantenberührung bei den Zähnen 3 und 4 mit dem Anfangskontakt im Punkt $K_t$ entstehen. Die Kantenberührung kann auch nahe diesem Anfangskontakt erfolgen. Je nach den geometrischen Parametern der außer dem Wälzpunkt liegenden punktweise gekoppelten Strecken und der Belastungshöhe des Getriebes kann der Punkt $K_t$ auf der Evolventenstrecke 12 des Stirnprofils des Zahns 3 (in Fig. 4 abgebildet) oder auf dessen konkaven Strecken 10 liegen. In jedem Fall bewegt sich der Punkt $K_1$ nach unten am Stirnprofil des Zahns 3. Dabei wird mit dem Drehen der Zahnräder und Erhöhung der Belastung der Zähne 3 und 4 die innige Berührung auf der konvexen Strecken 9 und den konkaven Strecken 10 erfolgen. Dies geschieht bis zum Wechsel der Bewegungsrichtung des Berührungspunktes in die entgegengesetzte Richtung nach oben am Stirnprofil des Zahns 3 und dem Zusammenfallen der theoretischen Berührungspunkte $K_3$ und $K_4$ und dem Anfangspunkt $N_2$ des Arbeitsbereichs $N_1$ und $N_2$ in der Eingriffslinie $L_1L_2$ bei der eine konvex-konkave und eine bikonvexe Berührung auf beiden Seiten des Knickpunktes $K_3$ auf dem Stirnprofil des Zahns 3 stattfindet. Diese setzt sich fort bis zu den oberen Grenzpunkten $K_5$ und $K_6$ der Berührung der Evolventenstrecken 8 und 9. Die Innigkeit der Zahnberührung wächst mit deren Einspuren und der dabei wachsenden Belastung und sinkt mit deren Ausspuren und der dabei auf Null sinkenden Belastung. In der kinematischen Einspur-Phase der Zähne 3 und 4 im Punkt $N_1$ ist zwischen den Zahn profilen der Zähne 5 und 6 Luft. Unter Belastung sind die Zahnteilungen der verformten Zähne 3 und 4, 5 und 6 vergrößert ($T'_1> T_1$) oder reduziert ($T'_2 < T_2$). Dadurch wird meistens diese Luft beseitigt, und es entsteht eine innige Berührung bei den Zähnen 5 und 6. Der Krafteingriff der Zähne 5 und 6 nach ihrem kinematischen Eingriffswechsel im Punkt $N_2$ ist analog zum Einspuren der Zähne 3 und 4 aber entgegengesetzt zum Verlauf von diesem. Die Strecken der Arbeitsprofile der Zähne mit der erhöhten Innigkeit der Berührung (Fig. 5) schaffen einen sanften diskreten Eingriffswechsel ohne scharfe Änderung der Eingriffsfestigkeit. Mit den Bezugszeichen 27 und 28 sind die normalen Berührungsspannungen bei den Zähnen 3 und 4 bzw. 5 und 6 im Vergleich zu den mit 29 und 30 bezeichneten Verläufen gezeigt. Diese Verläufe sind für die Kantenberührung der Zähne mit kleineren Höhenmaßen der punktweise gekoppelten Strecken der Arbeitsprofile beim Zahnkopf typisch. Die Verläufe charakterisieren auch qualitätsmäßig die Verhältnisse der Temperaturerhöhungen beim Zahneingriff. Die Hauptperiode der Neuverteilung der Belastung fällt mit der günstigsten Phase zusammen, wenn beide Zahnpaare eine konvex-konkave Berührung ohne Evolventenstrecken aufweisen. Der Einsatz der außer dem Wälzpunkt liegenden punktweise gekoppelten Strecken der Stirnzahnprofile mit der Wälzbahn-Berührung in Phasen des Krafteingriffs (von einem oder mehreren Paaren) bei β = 0 oder mit deren Wälzbahn-Berührung im Rahmen der Mischverzahnung IP bei β ≠ 0 erhöht die Effizienz, den Wirkungsgrad und das Einlaufverhalten des Getriebes. Dies reduziert auch seine vibroakustische Aktivität und die Empfindlichkeit gegen Geometrieabweichungen und das Verkeilungsrisiko.

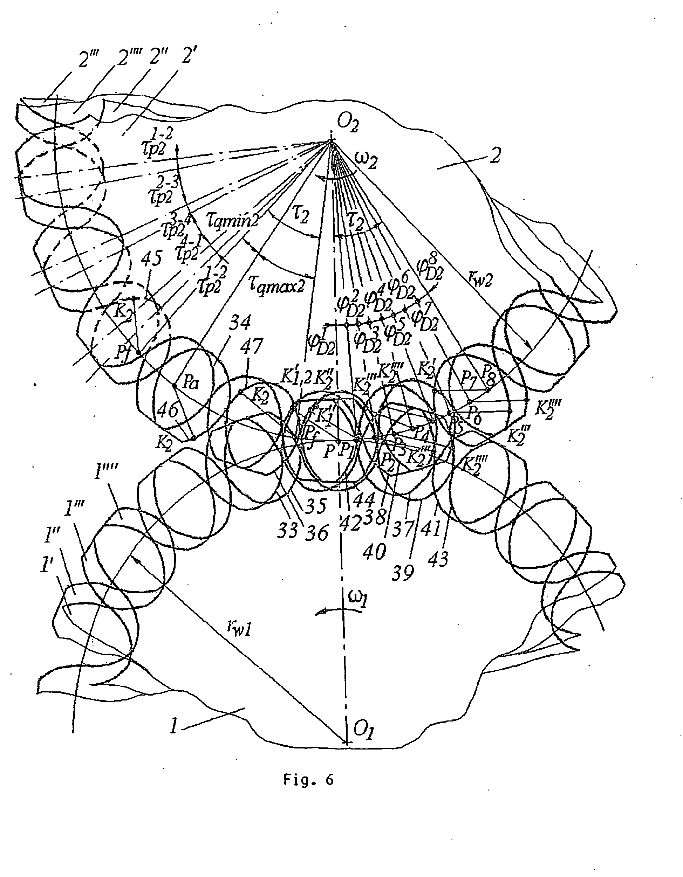

Die Verbesserung der Parameter des Stirn-Eingriffswechsels von den Zähnen beim Getriebe mit mehreren Leistungsflüssen sowie die Reduzierung der Schwingungserregung z NP der Frequenz wird durch die Kombination der diskreten Eingriffswechsel der Zähne (33,34; 35,36; 37,38; 39,40; 41,42; 43,44 usw.) erreicht, wobei z die Anzahl der Zähne beim Zahnkranz. P die Anzahl der mit der Verschiebung zusammenwirkender Zahnkränze beim Paar der mehrteiligen Vielkranz-Räder und N die Anzahl der Bogenstrecken auf dem Arbeitsprofil der Zähne ist. In Fig. 6 sind insbesondere Strecken der Zahnprofile symbolisch mit einer Punktlinie nur im linken Teil des Vierkranz-Rades 2 abgebildet. Die Zähne greifen bei verschiedenen Paaren der zusammenwirkenden Zahnkränze mit den gleichen Winkelentfernungen

$$\varphi_{D1,2}^1 = \varphi_{D1,2}^2 = \ldots = \varphi_{D1,2}^8$$ ein. Dies erfolgt zwischen den benachbarten Kreuzungspunkten der Normale zu den Arbeitsprofilen in theoretischen Berührungspunkten $K'_{1,2} + K''''_{1,2}$ aller Zahnkränze mit der Wälzbahn von jedem Rad auf deren Stirnebene mit dem gesamten Überdeckungskoeffizienten $\varepsilon_\gamma = 0$. Dabei enthält das Arbeitsprofil 45 zwei außer dem Wälzpunkt liegende Bogenstrecken 46 und 47. Die relativen Winkelverschiebungen der gleichnamigen Eingriffsphasen bei den Stirnprofilen der Zähne der seriell zusammenwirkenden Zahnkranzpaare $T_{p1,2}$ sind als

$$\tau_{p1,2}^{1-2} = \tau_{p1,2}^{3-4} = 0{,}5\,\tau_{qmin1,2}$$ und $$\tau_{p1,2}^{2-3} = \tau_{p1,2}^{4-1} = 0{,}5\,\tau_{qmax1,2}$$ gewählt. Dies hängt von der maximalen $T_{qmax1,} = 3/4T_{1,2}$ und der minimalen $Tq_{min1,2} = 3/4T_{1,2}$ Winkelentfernung zwischen den benachbarten Kreuzungspunkten $p_a$ und $p_f$ der Normalen zu den Arbeitsprofilen der Zähne bei jedem einzelnen Zahnkranz in theoretischen Berührungspunkten mit der Wälzbahn ab. Einige Punkte $K''''_2$ sind in der Zeichnung symbolisch als $K_2$ gezeigt. Diese Werte werden beispielsweise aus dem Verhältnis bestimmt:

$$(1) \qquad (T_{p\,max1,2} - T_{p\,min1,2}) / T_{qmin1,2} = 1, \text{ wenn } T_{1,2} / (P\,T_{qmin1,2}) = 1;$$

$$(2) \qquad T_{p\,max1,2} \approx T_{p\,min1,2}), \text{ wenn } T_{1,2} / (P\,T_{qmin1,2}) > 1;$$

Die Winkel des diskreten Eingriffswinkels der Zähne sind aus dem Verhältnis

$$(3) \qquad \varphi_{D1,2}^1 \approx \varphi_{D1,2}^2 \approx \ldots \approx \varphi_{D1,2}^8 = \min(\tau_{pmin1,2},\ \tau_{qmin1,2})$$

gewählt.

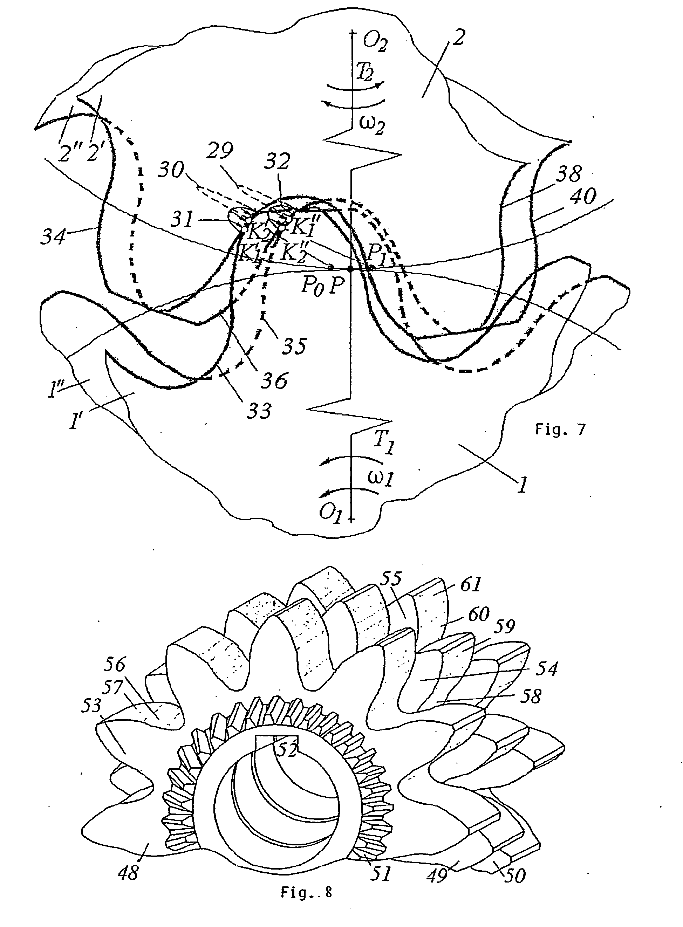

Der Kraft-Eingriffswechsel (Fig. 7) der Zähne 33 - 34 und 35 - 36 der mehrteiligen Vielkranz-Räder (mit Kreuzungspunkten $P_0$ und $P_1$ mit dem Wälzkreis der Projektionen von Normalen zu den Arbeitsprofilen in den Punkten $K'_2$ und $K'''_2$, die mit dem Wälzpunkt P nicht zusammenfallen) erfolgt bei der Verformungsveränderung der relativen Verschiebungen von den Zahnkränzen 1'-1" und 2'-2" von der Phase der Übereinstimmung (Fig. 6) von Punkten $K_1'$ und

$K_2'$ ($\tau_{p1} < \tau_{p1}^{1-2}$ und $\tau_{p2} > \tau_{p2}^{1-2}$) bis zur Lage der Räder 1 und 2 (s. Fig. 7), und $\tau_{p1} > \tau_{p1}^{1-2}$, $\tau_{p2} < \tau_{p2}^{1-2}$ von dieser Lage bis zur Phase der Übereinstimmung von Punkten $K_1"$ und $K_2"$. Deshalb bewahren die Zähne 33 - 34 nach dem kinematischen Ausspuren und die Zähne 35 - 36, die den kinematischen Eingriff noch nicht erreicht haben, die Kraftberührung auf. Die Figuren der Berührungsspannungen 31 und 32 stellen die Erhöhung der Innigkeit bei der Berührung dar und im Hintergrund der Figuren 29 und 30 die Berührungsspannungen außer dem Wälzpunkt liegenden punktweise gekoppelten Strecken mit kleineren Höhenmaßen. Durch die aus der Gleichung (1) gefundenen ungleichmäßigen Verschiebungen von vier Scheiben $\tau_{p1,2}^{1-2} = \tau_{p1,2}^{3-4} = \dfrac{\tau_{1,2}}{8}$ und $\tau_{p1,2}^{2-3} = \tau_{p1,2}^{4-1} = \dfrac{3}{8}\tau_{1,2}$ bei jedem der mehrteiligen Gegenräder ist die gleichmäßige Verteilung $\varphi_{D1,2}^1 = \varphi_{D1,2}^2 = \ldots = \varphi_{D1,2}^8 = 0{.}125\,\tau_{1,2}$ von Phasen des diskreten Eingriffswechsels von Zähnen mit der zum Oberflächenkontakt nahen Wälzbahn-Berührung der Zähne erreicht.
Die Zahnkränze 48, 49 und 50 mit den Scheiben-Felgen (Fig. 8) des mehrteiligen Dreikranz-Rads sind versetzt zueinander und miteinander durch Elemente 51 des Kurwik-Stirnradgetriebes verbunden. Die Nabennut 52 dient zur Radbefestigung auf der Welle. Auf den Flanken der Zähne 53, 54 und 55 bei den verschiedenen Zahnkränzen sind die integralen Tragbilder (nach kurzzeitigem Kraftdrehen mit dem Gegenrad) mit der Teilung nach den Zahnfüßen und Zahnköpfen der Zähne 56 und 57, 58 und 59, 60 und 61 zu sehen.

Durch eine derartige Ausführung sind die Wälzpunktphase und die StrecKen der Evolventenverzahnung ausgeschlossen. Die Größe der punktweise gekoppelten Strecken des Stirnprofils und die Belastbarkeit des Getriebes sind wesentlich vergrößert.

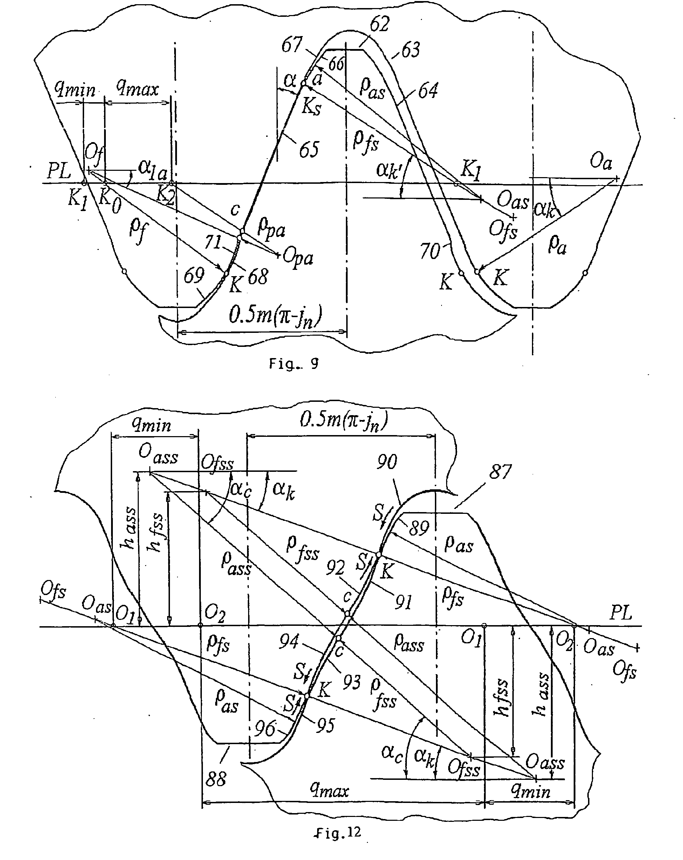

Zur größeren Verschleißfestigkeit des diskreten Getriebes vom IP-Typ schließen die Flankenprofile der Bezugsprofile bei den Zähnen 62 und 63 geradlinige (Evolventen) -Strecken 64 und 65 mit dem Profilwinkel $\alpha$ ein (Fig. 9, wobei m den Zahnmodul und $j_n$ den Flankenspiel-Koeffizient bedeuten). Sie sind fließend mit zwei außer dem Wälzpunkt gelegenen Grund-Bogenstrecken 66 - 67 (bei $a'_k = a'_{1a} = a$) und 68 - 69 (bei $a_{1a} < a_k$, $a_{1a} < a$) verbunden. Die Verbindung ist durch kleindimensionierte technologische Strecken 70 beim Zahnfuß des Zahns 62 und 71 beim Zahnkopf des Zahns 63 realisiert. Die Phasen des Eingriffswechsels der Zähne in den Evolventenstrecken in Punkten $K_1$ und $K_2$ sind durch zwei Intervalle $q_{min}$ und $q_{max}$ mit dem Berührungspunkt $K_0$ der punktweise gekoppelten Strecken 68 - 69 geteilt.

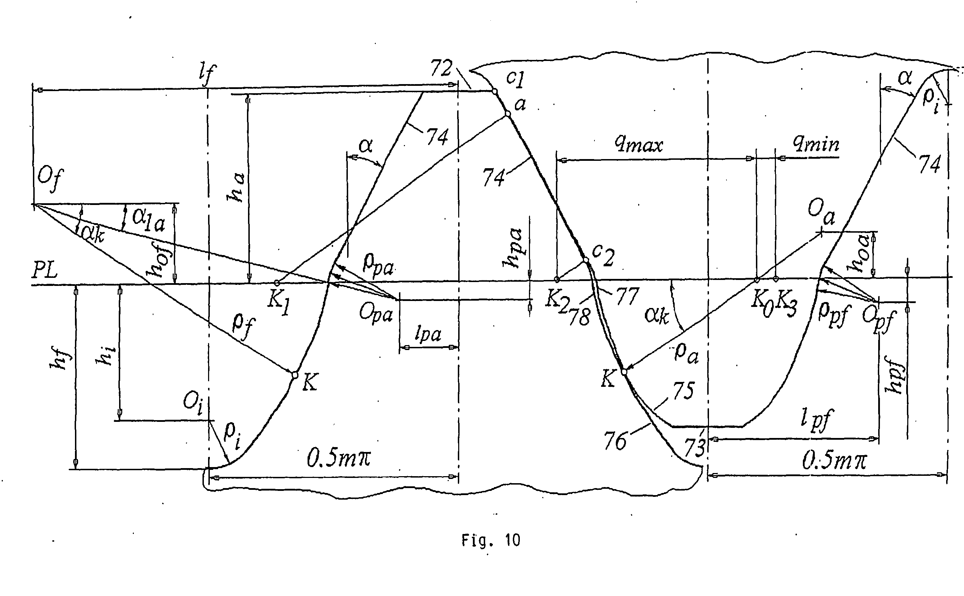

Das Außer-Wälzpunkt-Getriebe vom IP-Typ auf der Basis von einem Paar der Bezugsprofile 72 und 73 (Fig. 10) ist mit den evolventenförmigen (geradlinigen) Strecken 74 und punktweise gekoppelten Strecken 75 und 76 mit einem theoretischem Winkel $a_k < a_{1aJ}$ ausgeführt. Die Strecken sind miteinander mit den kleindimensionierten technologischen Profilstrecken 77 und 78 der Zähne verbunden. Die Verbindung ist so, dass die Evolventenstrecken 74 der Profile bei den zusammenwirkenden Zähnen die Phasen des Nach-Wälzpunkt- und des Vor-Wälzpunkt-Eingriffs bilden. Dabei werden die Eingriffswechsel-Phasen in Punkten $K_1$ (für den oberen Grenzpunkt a des Profils vom Ist-Rad) und $K_2$ durch zwei Intervalle $q_{min}$ und $q_{max}$ mit dem Berührungspunkt der punktweise gekoppelten Strecken geteilt. Dadurch ist die bauliche Flexibilität der IP-Verzahnung erhöht. Es sind nach der kinematischen Zusammenwirkung die geschwächten Wälzpunktstrecken beseitigt. Das Einlaufverhalten und die Zuverlässigkeit des IP-Getriebes werden dadurch verbessert und seine Hauptvorteile mit $\varepsilon_\alpha < 1$ erhalten. Außerdem lässt sich im Außer-Wälzpunkt-Getriebe vom IP-Typ der Effekt der Ausgleichung der Berührungsfestigkeit des Zahnkopfes und des Zahnfußes vom Typ 72 bei einem der Gegenräder erkennen. Dabei realisiert sich der sogenannte Kopfeffekt am Vollständigsten. Die Gegenräder mit beliebiger Längsform der Zähne können mit der wesentlich verstärkten Eingriffsphase vor dem Wälzpunkt sowie mit dem größeren Festigkeitsabfall der Zähne ausgeführt werden, wobei die verstärkte Eingriffsphase nach den Effekten der Berührungskrümmung der Zähne und die Eingriffsphase auch nach dem Wälzpunkt auftreten kann.

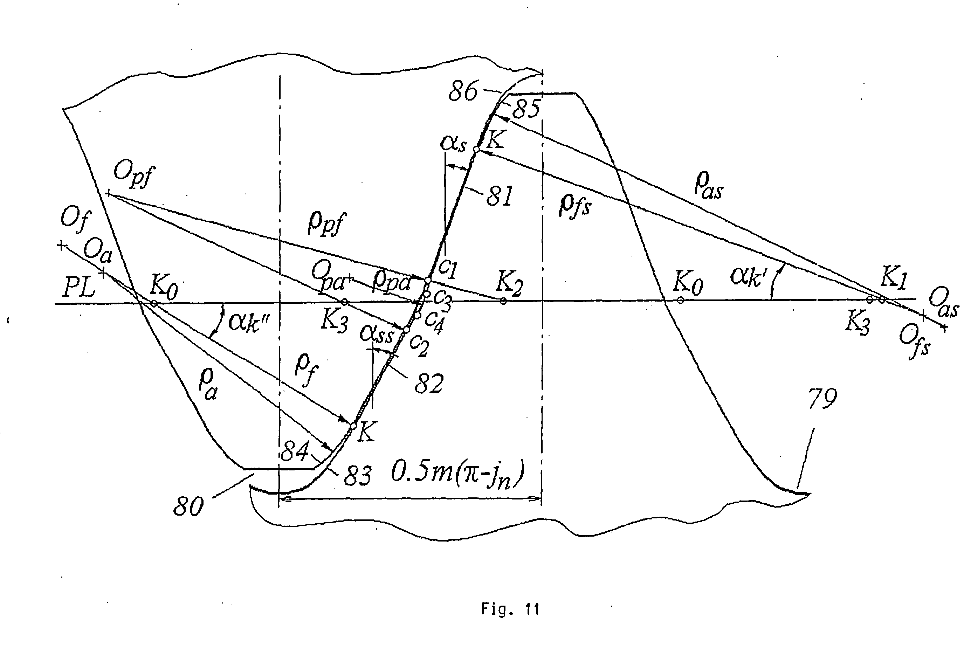

Die Ausführung der Profile der Zähne 80 und 79 (Fig. 11) bei einem Außer-Wälzpunkt-Getriebe mit kleindimensionierten Strecken $C_1 C_2$ sowie $C_3 C_4$ ist wie folgt:

Der obere Grenzpunkt $C_2$ der kleindimensionierten technologischen Strecke des Zahnprofils von einem der Gegenräder liegt beim Zahnkopf. Die Evolventenstrecken 81 und 82 der Profile bei den zusammenwirkenden Zähnen bilden die Phasen des Vor-Wälzpunkt- und des Nach-Wälzpunkt-Eingriffs mit dem teilweisen Doppelpaar-Eingriff und mit dem Eingriffswechsel auf den punktweise gekoppelten Strecken 83 und 84 (Phase $K_0$) und 85 und 86 (Phase $K_1$).

Ein derartiges Doppelpaar-Getriebe vom IP-Typ hat drei charakteristische Eingriffsperioden: Einpaar- und Doppelpaar-Periode sowie die Periode mit der mangelnden Überdeckung $\Delta\varepsilon$. Die Phase des Stirneingriffs der punktweise gekoppelten Strecken im Punkt $K_1$ liegt zwischen den Grenz-Eingriffspunkten der Evolventenstrecken $K_3$ und $K_2$ der benachbarten Zahnpaare. Das bedeutet, dass diese Phase am Austritt aus dem Eingriff ($K_3$) der Evolventenstrecken von einem Zahnpaar bis zum Kommen in Eingriff ($K_2$) der Evolventenstrecken von einem weiteren Zahnpaar liegt. Der diskrete Eingriffswechsel der Zähne in Verbindung mit unterschiedlicher Kinematik des evolventenförmigen Vor-Wälzpunkt- und des Nach-Wälzpunkt-Eingriffs verbessert die vibroakustischen Parameter und erhöht insbesondere die Effizienz des Außer-Wälzpunkt-Eingriffs bei Hochgeschwindigkeits-Getrieben vom IP-Typ.

Das diskrete Außer-Wälzpunkt-Getriebe mit einer im Laufe des Betriebs veränderlichen relativen Radachsen-Position wird ohne Evolventenverzahnungs-Phasen ausgeführt. Jede Grundstrecke des Profils beim Paar der identischen Bezugsprofile 87 und 88 (Fig. 12) wird als Mischstrecke beschrieben. Dies erfolgt nach verschiedenen Gesetzen 89, 90 und 91, 92 sowie 93, 94 und 95, 96 mit Bildung der Knickpunkte.

Die Knickpunkte fallen mit theoretischen Berührungspunkten K der bogenförmigen Grundstrecken des Stirnprofils vom Fuß und Zahn zusammen, die im Punkt C mit dem Winkel des Profils $a_c$ gekoppelt sind. Auf der kinematisch geschwächten Strecke des Wälzpunkts weisen die Stirnprofile der Zähne mit der bikonkaven Form einen vergrößerten gegenseitigen Abtrieb auf. Die Eingriffswechsel-Phasen der Zähne in den Punkten $O_1$ und $O_2$ auf den Strecken 89 - 90 und 95 - 96 mit dem Intervall $q_{min}$ charakterisieren sich durch eine günstige Profilform. Das Intervall $q_{max}$ schließt den Eingriffswechsel der Strecken 91 - 92 und 93 - 94 in der Nähe von deren Eingriffsphasen im Wälzpunkt ein. Ein solches Getriebe hat einen kinematisch richtigen Eingriff in theoretischen Punkten K mit dem gesamten Überdeckungskoeffizienten $\varepsilon_\gamma = 0$.

Bei verschiedenen diskreten Getrieben sind die punktweise gekoppelten außer dem Wälzpunkt liegenden Strecken (z. B. 89 - 90 und 95 - 96) der Profile von einem Paar der Zahn-Bezugsprofile im Bereich der Druckwinkel mit den Abweichungen der geometrischen Werte ausgeführt. Die Druckwinkel überschreiten den theoretischen Druckwinkel

$a_k$. Die Abweichungen der geometrischen Werte sind zu der Vergrößerung des Achsenabstands $\Delta a_w > 0$ äquivalent. Die außer dem Wälzpunkt liegenden bogenförmigen Grundstrecken der Zahnprofile im Bereich der Druckwinkel, die größer als der Druckwinkel $a_k$ sind, sind mit den fließenden Kurven beschrieben. Diese Kurven nähern sich den Kreisbögen mit den technologisch möglichst nahen Krümmungsradien an. Die Krümmungsradien werden beispielsweise als

$$\Delta p = \frac{f_f}{sin(\alpha_{max} - \alpha_k)}$$ bestimmt. Dabei gilt: $f_f$ ist die Toleranz des Zahnprofils; $\Delta p = p_f - p_a$; $p_{af}$ sind die Krümmungsradien der Profile der sich berührenden konvexen und konkaven Strecken von einem Paar der Bezugsprofile der zusammenwirkenden Zähne; $a_{max}$ ist der maximale Profilwinkel des Zahnkopfes. Durch eine derartige Ausführung des diskreten Getriebes ist die Innigkeit der Zahnberührung beim Eingriffswechsel erhöht. Die Empfindlichkeit des Eingriffs zu den Geometrieabweichungen wird dagegen reduziert. Im Kegelradgetriebe (bzw. Stirnradgetriebe) führt es z. B. nach Fig. 12 zur vollständigen Unabhängigkeit der Position des Tragbildes in der Höhe des Stirnprofils von der Ist-Veränderung der Achsenanstellung (oder des Achsenabstands) der Räder. Bei deren Vergrößerung lokalisiert sich das integrale Tragbild immer mehr im Punkt K (in Fig. 12 mit Pfeilen ↓ angezeigt), ohne die Anfangsstellung von dessen Mitte in der Zahnhöhe zu verändern, in diesem Getriebe ist die Ist-Innigkeit der Zahnberührung eine Funktion der stochastisch in Erscheinung tretenden Abweichungen, die äquivalent zur Veränderung des Achsenabstands sind. Hier kann die Ist-Innigkeit das maximal mögliche Niveau (bis zur anfänglichen Oberflächenberührung) erreichen. Unter Anwendung der angeführten Gleichung zur Auswahl der Werte $\Delta p$ kann die Innigkeit der Berührung auch auf den Strecken 91 - 92, 93 - 94 etwas erhöht werden. Aber das reale Wachstum der Innigkeit der Berührung ist kinematisch ziemlich beschränkt. Deshalb ist es ratsam, die Auswahl der Parameter für diese Strecken mit dem Ausschluss der Kontaktzerstörung von Zähnen in der Wälzpunkt-Eingriffsphase (bei der bikonkaven Form des Spiels) oder mit der Vergrößerung des Eingriffswinkels (bei der Evolventenverzahnung im Wälzpunkt) zu verbinden.

Das Testen der Kraft-Stirnrad-Getriebe (mit Gerad-, Schräg- und Bogenverzahnung) sowie der Schrauben- und Kegelradgetriebe (mit Bogenzähnen) zeigte die Möglichkeit zur wesentlichen Reduzierung der Selbstkosten der Erzeugnisse durch niedrigere Anforderungen an die Legierung des Materials und durch die chemothermische- und Fertigbearbeitung der Zähne auf. U. a. gilt das für die Stirnradgetriebe des Moduls m = 2,5 ö 10 mm mit vollen und mehrteiligen Stahlrädern. Bei diesem wurde erreicht:

a) die Reduzierung der Selbstkosten und

b) gleichzeitig eine Erhöhung der Belastbarkeit (2-fach bei $H_{oberf}$ = HRC57, $\varphi_{D1,2}$ = 0,085$T_{1,2}$, $\varepsilon_\beta$ = 0, $\varepsilon_\gamma$ = 0,915 und 1,9-fach bei den mehrteiligen Dreikranz-Rädern $H_{oberf} \approx$ HB320, $z_{1,2}$ = 29, $\varphi_{D1,2}$ = $T_{1,2}$/6, $\varepsilon_\gamma$ = 0), eine Verlängerung der störungsfreien Betriebsdauer (über 10-fach bei $H_{oberf}$ = HB320, $\varphi_{D1,2}$ = 0,135$T_{1,2}$, $\varepsilon_\beta$ = 1.96, $\varepsilon_a$ = 0,865),

c) eine Reduzierung des Geräuschpegels (um 3 - 4dBA bei $H_{oberf}$ = HRC58, $\varphi_{D1,2}$ = 0,086$T_{1,2}$, $\varepsilon_\beta$ = 0, $\varepsilon_\gamma$ = 0,914),

d) die Vermeidung einer Verkeilung des Getriebes ($H_{oberf}$ = HB320, $\varphi D_{1,2}$ = 0,062$T_{1,2}$, $\varepsilon_\beta$ = 1,429, $\varepsilon_\gamma$ = 2,367) unter den extremen Bedingungen ohne Spiel und mit dem Achsenneigungsfehler bei den Gegenrädern $\gamma$ = 1,45·$10^{-3}$ der Radialverzahnung und

e) eine Reduzierung der Achsenmaße des schrägverzahnten Getriebes mit dem breiten Zahnkranz (1,67-fach von 150 mm auf 90 mm, $H_{oberf}$ = HB320, $\varphi_{D1,2}$ = 0,135$T_{1,2}$, $\varepsilon_\beta$ = 1,176, $\varepsilon_a$ = 0,865).

Das Radgetriebe ist anwendbar in verschiedenen technischen Objekten und kann in verschiedenen Bereichen menschlicher Tätigkeit eingesetzt werden. Seine Varianten können als Stirnrad-, Kegelrad-, Hypoid-, Schrauben-, Schnecken- und Spiroidgetriebe und dessen Räder als volle oder mehrteilige Räder mit beliebiger Längsform der Zähne ausgeführt werden. Die Erfindung bewirkt:

a) Verbesserung der Parameter von Kraftgetrieben,

b) Erhöhung der Belastbarkeit (bis 2-fach), der Betriebsdauer (bis 10-fach), der Schnellläufigkeit, des Wirkungsgrads und der Verschleißfestigkeit,

c) Reduzierung der dynamischen (vibroakustischen) Aktivität (um 1ö4 dBA) beim Eingriff, dessen Empfindlichkeit gegenüber Fertigungs- und Verformungsabweichungen der Geometrie,

d) Vereinfachung der Anfertigungstechnologie,

e) Reduzierung der Abmessungen, des Gewichts, des Stahlbedarfs und der Selbstkosten und

f) Reduzierung der Betriebsausgaben (u. a. niedrigere Anforderungen an die Schmier- und Wärmeableitungsbedingungen) und des Verkeilungsrisikos des Getriebes.

Sie erhöht die bauliche Flexibilität der Verzahnung und weist einen breiten Anwendungsbereich auf in unterschiedlichen Transportmaschinen, im Werkzeugmaschinenbau, im allgemeinen Getriebebau und in anderen Maschinenbauzweigen.

Zur Anfertigung des Radgetriebes und des erforderlichen Zahnbearbeitungswerkzeugs reicht die gängige weit verbreitete Ausrüstung aus.

**Patentansprüche**

1. Radgetriebe, das aus Zahnrädern (1, 2) mit einer Winkelteilung ($T_1$, $T_2$) der Zähne (3, 4 bzw. 5, 6) von zusammenwirkenden Zahnkränzen (1°, 2°) gebildet ist, wobei die Zahnkränze (1°, 20°) mit Einflusselementen (1' und 2', 1" und 2") und Mehrflusselementen der seriell zusammenwirkenden Zahnkränze versehen sind, und wobei die Stirnzahnprofile der Zähne (3, 4 bzw. 5,6) abschnitts- und/oder punktweise in theoretischen Berührungspunkten ($K_3$, $K_5$ und $K_4$, $K_6$, $K_1$ und $K_2$) beim Zahnkopf konvex und beim Zahnfuß konkav gewölbt in außer dem Wälzpunkt liegende Bogenstrecken (8 und 10 bzw. 9 und 7) fließend miteinander und mit anderen Evolventen bzw. Quasievolventen-Strecken (12, 11) verbunden sind,
   **dadurch gekennzeichnet,**
   **dass** die zusammenwirkenden Zahnkränze (1 °, 2°) mit den Winkeln ($\varphi_{a1,2}$) einer Stirnüberdeckung ausgeführt sind, wobei der Abbruch der Phasen des Stirn-Eingriffswechsels der Zähne um den Winkel $\varphi_{D1,2}$ oder $\varphi'_{D1,2}$ des diskreten Eingriffswechsels vom Endpunkt ($N_2$) der Zusammenwirkung von Stirnprofilen der Zähne (5 und 6) bis zum Anfangspunkt ($N_2$) der Zusammenwirkung von Zahnprofilen des weiteren Zahnpaares (3 und 4) gebildet ist und dass mindestens eine Phase des diskreten Eingriffswinkels vom Zahnpaar durch die außer dem Wälzpunkt liegenden, beim Zahnkopf konvexen und beim Zahnfuß konkaven, Bogenstrecken (9 und 10) gebildet ist und das Getriebe mit einem Koeffizienten für die Stirnüberdeckung der Zähne $\varepsilon_a < 1$ ausgeführt ist, z. B. bei einem gesamten Überdeckungskoeffizienten $\varepsilon_y = 0$.

2. Radgetriebe nach Anspruch 1, das von Mehrflusselementen gebildet ist und das die in einem Paket miteinander verbundenen mehrteiligen Räder mit der relativen Verschiebung der gleichnamigen Eingriffsphasen der Stirnzahnprofile von zwei und mehr koaxialen Zahnkränzen, z. B. geradverzahnten Zahnkränzen 1', 1 ", 1''' und 2', 2", 2''' und 2'''', enthält,
   **dadurch gekennzeichnet,**
   **dass** es mit der Kombination der diskreten Eingriffswechsel der Zähne (33 - 34, 35 - 36, 37 - 38, 39 - 40, 41- 42, 43 - 44 usw.) nach verschiedenen Paaren der zusammenwirkenden Zahnkränze und mit ungefähr gleichen Winkelentfernungen zwischen benachbarten Kreuzungspunkten der Projektionen von Normalen zu den Stirnzahnprofilen, in theoretischen Berührungspunkten K und charakteristischen Punkten der aktiven Strecken, aller Zahnkränze mit der Wälzbahn von jedem Rad auf dessen Stirnebene, z. B. mit dem Nullkoeffizienten für die gesamte Überdeckung $\varepsilon_y = 0$, ausgeführt ist und dass die Winkel des diskreten Stirn-Eingriffswechsels aus dem Verhältnis $\varphi_{D1,2}/T_{1,2} = 0,25$ gewählt sind.

3. Radgetriebe nach Anspruch 1, das als Stirnrad-, Kegelrad- oder als Schneckengetriebe auf Basis von einem Paar der nichtidentischen Bezugsprofile (72 und 73) mit den Evolventenstrecken 74 des Stirnprofils der Zähne ausgebildet ist, wobei jedes Stirnprofil mindestens mit einer außer dem Wälzpunkt liegenden Bogenstrecke (76, 75) durch eine zusätzliche kleindimensionierte technologische Strecke (77, 78) verbunden ist,
   **dadurch gekennzeichnet,**
   **dass** es als Außer-Wälzpunkt-Getriebe ausgebildet ist; wobei der obere Grenzpunkt der kleindimensionierten konvexen technologischen Strecke (78) des Zahn-Stirnprofils bei einem Zahnkopf der Gegenräder liegt, die Evolventenstrecken die Phasen des Nach-Wälzpunkt- und Vor-Wälzpunkt-Eingriffs bilden und die Winkel des diskreten Stirn-Eingriffswechsels aus dem Verhältnis $\varphi_{D1,2}/T_{1,2} = 0,4$ gewählt sind.

4. Radgetriebe nach Anspruch 1, das als Stirnrad- oder Hypoidgetriebe auf der Basis von einem Paar von Bezugsprofilen (87, 88), dessen Zahn-Stirnprofile die bogenförmigen, beim Kopf konkaven und beim Fuß konvexen Strecken (91, 92, 93, 94) enthalten und mit den Mischkurven mit Knickbildung in theoretischen Berührungspunkten (K) der außer dem Wälzpunkt liegenden Strecken beschrieben ist,
   **dadurch gekennzeichnet,**
   **dass** es als Außer-Wälzpunkt-Getriebe ausgeführt ist, wobei die Bogenstrecken (89 und 91, 90 und 92, 93 und 95, 94 und 96) des Zahnfußes und des Zahnkopfes fließend miteinander, z. B. im Zwischen-Knickpunkt "c" beim Teilungsfuß des Zahns mit dem Profilwinkel $a_c$ verbunden und die Winkel des diskreten Stirn-Eingriffswechsels aus dem Verhältnis $\varphi_{D1,2}/T_{1,2} = 0,25$ gewählt sind.

5. Radgetriebe nach Anspruch 1 bis 4,
   **dadurch gekennzeichnet,**
   **dass** es mit den Abweichungen der Geometrie- und Montageparameter ausgeführt ist, die äquivalent zur Vergrößerung des Achsenabstands von Stirnrädern oder der Achsenanstellung von Kegelrädern sind und dass die außer dem Wälzpunkt liegenden Bogenstrecken des Zahn-Stirnprofils im Bereich der Druckwinkel, die größer als der theoretische Druckwinkel $a_k$ sind, mit den fließenden Kurven beschrieben sind, die sich an die Kreisbögen mit den gleichen oder ungefähr gleichen Krümmungsradien annähern.

**Claims**

1. A wheel gear, comprised of toothed wheels (1, 2) with an angular pitch ($T_1$, $T_2$) of the teeth (3, 4, or respectively 5, 6) of interacting gear rims (1°, 2°), wherein the gear rims (1°, 2°) are provided with single-flow elements (1' and 2', 1" and 2") and multiple-flow elements of the serially interacting gear rims, and wherein, in theoretical contact points ($K_3$, $K_5$ and $K_4$, $K_6$, $K_1$ and $K_2$) with the tips of the teeth, the transverse tooth profiles of the teeth (3, 4, or respectively 5, 6) are continuously connected in a sectional or point-like manner with each other, are arched in a convex manner at the tips of the teeth and in a concave manner at the roots of the teeth, in sections of an arc (8 and 10, or respectively 9 and 7) located outside the pitch point, and with other involutes, or respectively quasi- involute sections (12, 11),
**characterized in that**
the interacting gear rims (1°, 2°) are designed with the angles ($\varphi_{a1,2,}$) of a front covering, wherein the termination of the phases of the transverse engagement change of the teeth is constituted by the angle $\varphi_{D1,2}$ or $\varphi'_{D1,2}$ of the discrete engagement change from the end point ($N_2$) of the interaction of transverse profiles of the teeth (5 and 7) as far as the starting point ($N_2$) of the interaction of the further pair of teeth (3 and 4), and that at least one phase of the discrete engagement angle is constituted by the pair of teeth by means of the sections of arc (9 and 10), which are located outside of the pitch point and are convex at the tip of the teeth and concave at the root of the teeth, and the gear is embodied with a coefficient for the front coverage of the teeth $\in_a$ < 1, for example in case of a total coverage coefficient $\in_y$ = 0.

2. The wheel gear in accordance with claim 1, which is embodied in the form of multiple-flow elements and which contains the multiple wheels connected with each other in a package with the relative displacement of the same engagement phases of the engagement phases of the transverse tooth profiles of two or more coaxial gear rims, for example straight-toothed gear rims 1', 1", 1''' and 2, 2', 2", 2'''and 2'''',
**characterized in that**
it is embodied with the combination of the discrete engagement changes of the teeth (33 - 34, 35 - 36, 37 - 38, 39 - 40, 41 - 42, 43 - 44, etc.) in accordance with different pairs of the gear rims acting together and with approximately the same angular distances between adjoining intersection points of the projection of normal lines to the transverse tooth profiles, in theoretical contact points K and characteristic points of the active courses, of all gear rims with the pitch line of each wheel on its front plane, for example with the zero coefficient for the entire coverage $\in_y$ = 0, and that the angles of the discrete front engagement change are selected from the relation $\varphi_{D1,2}/T_{1,2}$ = 0.25.

3. The wheel gear in accordance with claim 1, which is embodied in the form of a spur wheel gear, bevel wheel gear or worm gear on the basis of a pair of the non-identical reference profiles (72 and 73) with the involute sections (74) of the transverse profiles of the teeth, wherein each transverse profile is connected with at least one arc surface (76, 75) located outside of the pitch point by means of an additional technological section (77, 78) of small dimension,
**characterized in that**
it is embodied as an out-of-pitch-point gear, wherein the upper limit point of the convex technological section (78) of small dimension of the tooth transverse profile is located next to a tooth tip of the counter-wheels, the involute sections constitute the phases of the after-pitch point and pre-pitch point engagement, and the angles of the discrete engagement change are selected from the relation $\varphi_{D1,2}/T_{1,2}$ 0.4.

4. The wheel gear in accordance with claim 1, which is embodied in the form of a spur wheel gear or hypoid gear on the basis of a pair of reference profiles (87, 88), whose transverse tooth profiles contain the arc-shaped sections (91, 92, 93, 94), which are concave at the tip and convex at the root, and are described by means of the mixed curves with the formation of a kink in the theoretical contact points (K) of the sections located outside of the pitch point.
**characterized in that**
it is embodied as an out-of-pitch-point gear, in which the arc-shaped sections (89 and 91, 90 and 92, 93 and 95, 94 and 96) of the tip of the tooth and the root of the tooth are continuously connected with each other, for example in the intermediate kink point "c" at the pitch root of the tooth with the profile angle $a_c$, and the angles of the discrete front engagement change are selected from the relation $\varphi_{D1,2}/T_{1,2}$ = 0.25.

5. The wheel gear in accordance with claims 1 to 4,

**characterized in that**

it is embodied with the deviations of the geometry and assembly parameters which are equivalent to an increase of the axle distance of spur wheels or the axle placement of beveled wheels, and that the arc sections of the transverse tooth profile located outside of the pitch point in the area of the pressure angles, which are larger than the theoretical pressure angle $a_k$ are described by means of the flowing curves which approximate the arc of a circle with the same, or approximately the same, radii of curvature.

**Revendications**

1. Engrenage qui est formé de roues dentées (1, 2) avec un pas angulaire (T1, T2) des dents (3, 4 respectivement 5, 6) de couronnes dentées (1°, 2°) coopérantes, les couronnes dentées (1°, 20°) étant pourvues d'éléments monoflux (1' et 2', 1" et 2") et d'élément multiflux des couronnes dentées coopérant en série, et les profils de dent frontaux des dents (3, 4 respectivement 5, 6) étant reliés sectoriellement et/ou ponctuellement en des points de contact théoriques ($K_3$, $K_5$ et $K_4$, $K_6$, $K_1$ et $K_2$), avec une courbure convexe au niveau de la tête de dent et concave au niveau du pied de dent, dans des sections curvilignes (8 et 10 respectivement 9 et 7) situées en dehors du point primitif, de manière fluide entre eux et à d'autres sections en développantes ou quasi en développantes (12, 11),

   **caractérisé en ce**

   **que** les couronnes dentées coopérantes (1°, 2°) sont réalisées avec les angles ($\varphi_{a1,2}$) d'un recouvrement frontal, l'interruption des phases de changement d'engrènement frontal des dents de l'angle $\varphi_{D1,2}$ ou $\varphi'_{D1,2}$ du changement d'engrènement discret étant formée du point final ($N_2$) de la coopération de profils frontaux des dents (5 et 6) jusqu'au point initial ($N_2$) de la coopération de profils de dents de l'autre paire de dents (3 et 4) et qu'au moins une phase de l'angle d'engrènement discret de la paire de dents est formée par les sections curvilignes (9 et 10) situées en dehors du point primitif, convexes au niveau de la tête de dent et concaves au niveau du pied de dent et que l'engrenage est réalisé avec un coefficient pour le recouvrement frontal des dents $\varepsilon_a < 1$, p. ex. avec un coefficient de recouvrement total $\varepsilon_y = 0$.

2. Engrenage selon la revendication 1, qui est formé d'éléments multiflux et qui contient les roues en plusieurs parties reliées ensemble en un paquet avec le décalage relatif des phases d'engrènement de même nom des profils de dent frontaux de deux et plus couronnes dentées coaxiales, p. ex. de couronnes dentées à denture droite 1', 1", 1"' et 2', 2", 2"' et 2"",

   **caractérisé en ce**

   **qu'**il est réalisé avec la combinaison des changements d'engrènement discrets des dents (33 - 34, 35 - 36, 37 - 38, 39 - 40, 41 - 42, 43 - 44, etc.) selon différentes paires des couronnes dentées coopérantes et avec des distances angulaires approximativement égales entre des points d'intersection voisins des projections de normales aux profils de dent frontaux, en des points de contact théoriques K et des points caractéristiques des sections actives, de toutes les couronnes dentées avec la piste de roulement de chaque roue sur son plan frontal, p. ex. avec le coefficient nul pour le recouvrement total $\varepsilon_y = 0$, et que les angles du changement d'engrènement frontal discret sont choisis à partir du rapport $\varphi_{D1,2}/T_{1,2} = 0{,}25$.

3. Engrenage selon la revendication 1, qui est réalisé sous la forme d'engrenage à roues droites, à roues coniques ou à vis sans fin sur la base d'une paire de profils de référence (72 et 73) non identiques avec les sections en développante 74 du profil frontal des dents, chaque profil frontal étant relié au moins à une section curviligne (76, 75) située en dehors du point primitif par une section technologique (77, 78) supplémentaire de petite dimension,

   **caractérisé en ce**

   **qu'**il est réalisé sous la forme d'engrenage hors point primitif, le point limite supérieur de la section technologique convexe (78) de petite dimension du profil de dent frontal se situant au niveau d'une tête de dent des roues conjuguées, les sections en développante formant les phases de l'engrènement post-point primitif et pré-point primitif et les angles du changement d'engrènement frontal discret étant choisis à partir du rapport $\varphi_{D1,2}/T_{1,2} = 0{,}4$.

4. Engrenage selon la revendication 1, qui est décrit sous la forme d'engrenage à roues droites ou d'engrenage hypoïde sur la base d'une paire de profils de référence (87, 88), dont les profils de dent frontaux contiennent les sections curvilignes (91, 92, 93, 94) concaves au niveau de la tête et convexes au niveau du pied, et avec les courbes mixtes avec formation de points d'inflexion en des points de contact théoriques (K) des sections situées en dehors du point primitif,

   **caractérisé en ce**

   **qu'**il est réalisé sous la forme d'engrenage hors point primitif, les sections curvilignes (89 et 91, 90 et 92, 93 et 95, 94 et 96) du pied de dent et de la tête de dent étant reliées entre elles de manière fluide, p. ex. au point d'inflexion intermédiaire « c » au niveau du pied de division de la dent avec l'angle de profil $a_c$ et les angles du changement d'engrènement frontal discret étant choisis à partir du rapport $\varphi_{D1,2}/T_{1,2} = 0,25$.

5. Engrenage selon les revendications 1 à 4,
   **caractérisé en ce**
   **qu'**il est réalisé avec les écarts des paramètres de géométrie et de montage qui sont équivalents à l'agrandissement de l'entraxe de roues droites ou de l'inclinaison d'axe de roues coniques et que les sections curvilignes du profil de dent frontal situées en dehors du point primitif, dans la plage des angles de pression qui sont supérieurs à l'angle de pression théorique $a_k$, sont décrites par les courbes fluides qui s'approchent des arcs de cercle de mêmes ou à peu près de mêmes rayons de courbure.

Fig .1

Fig. 2

Fig .5

Fig. 3

EP 1 908 992 B1

Fig. 4

18

Fig. 6

Fig. 7

Fig.. 8

Fig. 9

Fig.12

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- SU 1185942
- EP 0293473 C
- RU 1075041
- SU 18397100
- RU 1571330
- US 4640149 A
- EP 0293473 A1